# EUROPÄISCHE PATENTANMELDUNG

(11) **EP 4 653 661 A2**
(43) Veröffentlichungstag der Anmeldung: **26.11.2025**
(21) Anmeldenummer: 25175911.4
(22) Anmeldetag: 13.05.2025
(51) Int. Cl.: F01D 5/02, F01D 5/06, F01D 5/30

(54) **ROTORVORRICHTUNG UND VERFAHREN ZUR HERSTELLUNG EINER ROTORVORRICHTUNG**

(30) Priorität: 22.05.2024 DE 102024114373
(71) Anmelder: Rolls-Royce Deutschland Ltd & Co KG, 15827 Blankenfelde-Mahlow (DE)
(72) Erfinder: WEINERT, Markus, 15827 Blankenfelde-Mahlow (DE); TURCU, Artur, 15827 Blankenfelde-Mahlow (DE)

(57) **Zusammenfassung**

Es werden eine Rotorvorrichtung (1) eines Gasturbinen-Flugtriebwerkes und ein Verfahren zum Herstellen der Rotorvorrichtung (1) beschrieben. Die Rotorvorrichtung (1) umfasst einen inneren Ringkörper (2), der einstückig mit Rotorblättern (3) ausgeführt ist, die sich vom inneren Ringkörper (2) radial nach außen erstrecken und mit ihren dem inneren Ringkörper (2) abgewandten Enden mit einem äußeren Ringkörper (4) in Verbindung stehen und einstückig mit dem äußeren Ringköper (4) ausgebildet sind. Der innere Ringkörper (2) ist im Bereich einer ringförmigen Innenseite (5), die den Rotorblättern (3) abgewandt ist, einstückig mit mehreren in Umfangsrichtung (U) des inneren Ringkörpers (2) zueinander beabstandeten Koppelelementen (6) ausgeführt, die formschlüssig mit Aussparungen einer Rotorscheibe in Eingriff bringbar sind, die radial innerhalb des inneren Ringkörpers (2) anordenbar ist.

## Beschreibung

Die vorliegende Offenbarung betrifft eine Rotorvorrichtung und ein Verfahren zur Herstellung einer Rotorvorrichtung gemäß der im Oberbegriff des Patentanspruches 1 bzw. 15 näher definierten Art.

Aus der US 6 969 240 B2 ist eine mittels Gießen hergestellte Turbinenkomponente bekannt, bei der Schaufelblätter einstückig mit einem inneren Ringkörper und einem äußeren Ringkörper ausgeführt sind. Der innere Ringkörper wird durch Diffusionsschweißen mit einer Rotorscheibe fest verbunden, die radial innerhalb des inneren Ringkörpers angeordnet ist.

Grundsätzlich treten während des Betriebes der Turbinenkomponente im Verbindungsbereich zwischen dem inneren Ringkörper und den Rotorschaufeln rotationsbedingte Umfangsbelastungen und Spannungskonzentrationen auf. Diese Belastungen werden im Betrieb, insbesondere bei großen Turbinenkomponenten, noch dadurch erhöht, dass die thermischen Belastungen in den Bereichen der Turbinenkomponente, d.h. des inneren Ringkörpers und der Rotorschaufeln, wesentlich höher sind als die thermischen Belastungen, denen die außerhalb der Heißgasströmung liegende Rotorscheibe ausgesetzt ist. Aus den unterschiedlich hohen thermischen Belastungen resultieren hohe Temperaturgradienten in der Turbinenkomponente in radialer Richtung, die die Umfangslasten im inneren Ringkörper und im Verbindungsbereich zwischen dem inneren Ringkörper und den Rotorschaufeln verstärken. Um den Belastungen im Betrieb standhalten zu können, muss die Turbinenkomponente mit einer entsprechend hohen Bauteilsteifigkeit ausgelegt werden, was jedoch nachteilig das Bauteilgewicht und die Herstellkosten erhöht.

Darüber hinaus ist die Verbindung des inneren Ringkörpers mit der Rotorscheibe durch Diffusionsschweißen mit hohen Einrichtungskosten verbunden, und das Diffusionsschweißen ist im Vergleich zu anderen Schweißtechniken in der Regel sehr zeitaufwendig. Außerdem ist die Vorbereitung der Werkstücke aufwendig und die Größe der Schweißnaht durch die jeweils verfügbare Ausrüstung begrenzt. Darüber hinaus hängt das Ergebnis des Diffusionsschweißprozesses stark von den Schweißparametern wie Temperatur und Druck, der Oberflächenbeschaffenheit des Metalls und dem Schweißwerkstoff ab, was den Fertigungsaufwand und damit die Herstellungskosten der Turbinenkomponente zusätzlich erhöht.

Der vorliegenden Offenbarung liegt die Aufgabe zugrunde, eine kostengünstig herstellbare Rotorvorrichtung zu schaffen. Des Weiteren liegt der vorliegenden Offenbarung die Aufgabe zugrunde, ein mit geringem Aufwand durchführbares Verfahren zur Herstellung einer Rotorvorrichtung zur Verfügung zu stellen.

Diese Aufgabe wird mit einer Rotorvorrichtung und mit einem Verfahren mit den Merkmalen des Patentanspruches 1 bzw. 15 gelöst.

Gemäß einem ersten Aspekt wird eine Rotorvorrichtung eines Gasturbinen-Flugtriebwerkes vorgeschlagen. Die Rotorvorrichtung umfasst einen inneren Ringkörper, der einstückig mit Rotorblättern ausgeführt ist. Die Rotorblätter erstrecken sich vom inneren Ringkörper radial nach außen und stehen mit ihren dem inneren Ringkörper abgewandten Enden jeweils mit einem äußeren Ringkörper in Verbindung und sind einstückig mit dem äußeren Ringköper ausgebildet.

Erfindungsgemäß ist der innere Ringkörper im Bereich einer ringförmigen Innenseite, die den Rotorblättern abgewandt ist, einstückig mit mehreren in Umfangsrichtung des inneren Ringkörpers zueinander beabstandeten Koppelelementen ausgeführt. Die Koppelelemente sind formschlüssig mit Aussparungen einer Rotorscheibe in Eingriff bringbar, die radial innerhalb des inneren Ringkörpers anordenbar ist.

Das einstückige Rotorbauteil, das aus dem äußeren Ringkörper, den Rotorblättern, dem inneren Ringkörper und den Koppelelementen besteht, weist eine einstückige und kostengünstig herstellbare sogenannte BLING-Bauweise (BLING = "Bladed Ring") auf und wird nachfolgend als Bling-Bauteil bezeichnet.

Die neuartige Ausführung des Bling-Bauteils kann fertigungstechnisch aus einem Stück aus Werkstoffen mit hoher thermischer Belastbarkeit gegossen werden, die normalerweise für Turbinenschaufeln verwendet werden. Dadurch werden die hohen Kosten eines kompletten Satzes einzeln gegossener Rotorblätter für eine einzelne Rotorstufe vermieden. Zusätzlich kann ein kosteneffektives Verfahren für die Fertigung der Koppelbereiche eingesetzt werden.

Da der innere Ringkörper sowie die damit einstückig ausgeführten Rotorblätter und der wiederum damit einstückig ausgeführte äußere Ringkörper über die Koppelelemente in den Aussparungen der Rotorscheibe befestigt sind, kann ein Teil der im Betrieb fliehkraftbedingt angreifenden Radiallasten vom inneren Ringkörper insbesondere im Bereich der Plattformen des inneren Ringkörpers, in deren Bereichen die Rotorblätter mit dem inneren Ringkörper verbunden sind, aufgenommen werden. Der andere Teil der Radiallasten wird im Bereich der Aussparungen der Rotorscheibe abgestützt. Damit werden Festigkeitsprobleme, die aufgrund hoher Belastungen im Bereich der Aussparungen von Rotorscheiben bekannter Rotoren auftreten, die jeweils einzelne und unabhängig voneinander mit der Rotorscheibe verbundene Rotorblätter aufweisen, mit geringem Aufwand überwunden.

Darüber hinaus ermöglichen die geringeren Betriebsbelastungen im Bereich des inneren Ringkörpers und die daraus resultierenden geringeren Belastungen der Rotorscheibe im Bereich der Aussparungen die Herstellung der Rotorscheibe aus bekannten hochfesten Werkstofflegierungen mit geringerem Bauteilgewicht bei gleichzeitig höherer Lebensdauer.

Die Selbsttragfähigkeit und die Art und Weise, wie die Scheibe und das Bling-Bauteil aufgrund von Temperaturunterschieden zusammenwirken, hängen auch von der gewählten Materialkombination der Rotorscheibe und des Bling-Bauteils ab. Es wurde festgestellt, dass durch die Verwendung von Ni-Co-Legierungen für die Herstellung des Bling-Bauteils in Kombination mit einer Rotorscheibe, die aus Ni-Co-Cr-Legierungen mit hohem Cr-Anteil besteht, eine Rotorvorrichtung mit hoher Umfangslasttragfähigkeit ermöglicht.

Die Koppelelemente können in Umfangsrichtung des inneren Ringkörpers jeweils ein schwalbenschwanzförmiges oder ein tannenbaumförmiges Profil aufweisen, während die Aussparungen der Rotorscheibe jeweils mit Profilen ausgeführt sein können, die zur Herstellung der formschlüssigen Verbindung zwischen der Rotorscheibe und dem Bling-Bauteil jeweils mit den Profilen der Koppelelemente korrespondierenden.

Als Schwalbenschwanznuten ausgeführte Aussparungen der Rotorscheiben bieten den Vorteil, dass sie in radialer Richtung einen geringen Bauraumbedarf aufweisen und mit geringem konstruktiven Aufwand in kleineren Gasturbinentriebwerken eingesetzt werden können.

Die Anzahl der Rotorblätter kann in Abhängigkeit des jeweils vorliegenden Anwendungsfalles gleich der Anzahl der Koppelelemente entsprechen oder von der Anzahl der Koppelelemente abweichen.

Zudem besteht anwendungsfallabhängig die Möglichkeit, dass eine in radialer Richtung verlaufende Symmetrielinie von wenigstens einem der Koppelelemente mit einer radial verlaufenden Symmetrielinie eines der Rotorblätter fluchtet oder die Koppelelemente und die Rotorblätter in Umfangsrichtung zueinander versetzt angeordnet sind und in radialer Richtung verlaufende Symmetrielinien der Koppelelemente in Umfangsrichtung des inneren Ringkörpers jeweils einen spitzen Winkel mit radial verlaufenden Symmetrielinien der Rotorblätter einschließen.

Dabei besteht die Möglichkeit, dass die Winkel zwischen den Symmetrielinien der Koppelelemente und der Symmetrielinien der Rotorblätter jeweils derart ausgelegt werden, dass eine gewünschte Last- und Spannungsverteilung innerhalb der Verbindungsbereiche zwischen den Rotorblättern und dem äußeren Ringkörper, im Bereich der Plattformen und in den Verbindungbereichen zwischen den Rotorblättern und dem inneren Ringkörper vorliegt.

Die Aussparungen verlaufen radial in der Rotorscheibe bzw. es stehen deren Verläufe senkrecht zur Umfangsfläche der Rotorscheibe, um die Montage durch Einschieben der Koppelelemente des Bling-Bauteils in die Aussparungen der Rotorscheibe mit möglichst geringem Aufwand zu ermöglichen.

Die Profile der Koppelelemente und die Profile der Aussparungen der Rotorscheibe sind bei weiteren Ausführungsform der Rottorvorrichtung gemäß der vorliegenden Offenbarung dazu eingerichtet, dass in montiertem Zustand des Bling-Bauteils zwischen radial nach außen weisenden Anlageflächen der Profile der Koppelelemente und radial nach innen weisenden Anlageflächen der Profile der Aussparungen der Rotorscheibe jeweils eine Presspassung vorliegt.

Dadurch wird mit geringem konstruktiven Aufwand erreicht, dass die Anlage- bzw. Kontaktflächen der Profile der Koppelelemente und die Anlage- bzw. Kontaktflächen der Aussparungen sich vollständig in Eingriff befinden und die feste Verbindung zwischen der Rotorscheibe und dem Bling-Bauteil erreicht wird, die die Funktionsweise der Rotorvorrichtung dauerhaft gewährleistet.

Alternativ hierzu besteht die Möglichkeit, dass mittlere Anlagepunkte von radial nach innen gerichteten und in Umfangsrichtung der Rotorscheibe nebeneinander angeordneten Anlageflächen der Profile der Aussparungen der Rotorscheibe jeweils in radialer Richtung zueinander versetzt sind. Dann können radial nach außen gerichtete Anlageflächen der Profile der Koppelelemente in montiertem Zustand jeweils an den Anlageflächen anliegen, deren mittlere Anlagepunkte radial weiter innen liegen, während die jeweils weiteren Anlageflächen der Profile der Koppelelemente von den Anlageflächen der Profile der Aussparungen beabstandet sind, deren mittlere Anlagepunkte radial weiter außen liegen.

Der radiale Versatz der mittleren Anlagepunkte von radial nach innen gerichteter Anlageflächen der Aussparungen bewirkt, dass ein Koppelelement, das in eine derart ausgebildete Aussparung eingreift, sich nach der Montage zunächst lediglich auf einer Seite mit der Kontaktfläche der Aussparung in Anlage befindet. Während des Starts einer mit der Rotorvorrichtung ausgeführten Gasturbinentriebwerks und im weiteren Betrieb wird das Bling-Bauteil erwärmt und dehnt sich mit steigender Bauteiltemperatur sowie aufgrund der angreifenden Zentrifugalkräften aus, bis das jeweilige Koppelelement auch im Bereich der gegenüberliegenden Kontaktfläche in Anlage kommt.

Der radiale Versatz zwischen den mittleren Anlagepunkten ermöglicht somit eine radiale Ausdehnung des Bling-Bauteils und unterstützt die Rotorscheibe bei der Aufnahme der Fliehkräfte des Bling-Bauteils. Dadurch wird die Belastung des Scheibenrands der Rotorscheibe reduziert. Darüber hinaus ermöglicht die teilweise Verlagerung der Betriebslasten von der Rotorscheibe in das Bling-Bauteil, die Rotorscheibe mit einem geringeren Bauteilgewicht auszulegen.

Um die Funktion des Bling-Bauteils im Betrieb zu gewährleisten, ist das Bling-Bauteil in montiertem Zustand zudem gegen axiale Bewegungen an der Rotorscheibe zu sichern. Dabei besteht die Möglichkeit, das Bling-Bauteil in der gleichen Weise über Sicherungselemente axial an der Rotorscheibe zu befestigen, die zur axialen Befestigung von Turbinenschaufeln an einer Rotorscheibe verwendet werden, welche Rotorschaufeln alle einzeln mit der Rotorscheibe verbunden sind. Vorteilhafterweise sind aufgrund der einstückigen Ausführung des Bling-Bauteils zur axialen Befestigung des Bling-Bauteils an der Rotorscheibe nur zwei oder drei der bekannten Sicherungselemente erforderlich. Dadurch ist die Turbinenkomponente gemäß der vorliegenden Offenbarung im Vergleich zu herkömmlich ausgebildeten Turbinenkomponenten mit einem geringeren Bauteilgewicht ausführbar.

Übergangsradien der Koppelelemente in Verbindungsbereichen der Koppelelemente mit der Innenseite des inneren Ringkörpers und minimale Wandstärken der Verbindungsbereiche in Umfangsrichtung des inneren Ringkörpers können in Abhängigkeit von im Betrieb anliegenden maximalen Radiallasten und in den Verbindungsbereich wirkenden Spannungskonzentrationen so ausgelegt sein, dass alle Anlageflächen der Profile der Koppelelemente mit allen Anlageflächen der Profile der Aussparungen in Kontakt stehen.

Des Weiteren kann es vorgesehen sein, dass Dicken des inneren Ringkörpers in Verbindungsbereichen mit den Rotorblättern in Abhängigkeit einer Bauteilsteifigkeit und einer Biegefähigkeit des inneren Ringkörpers ausgelegt werden, bei deren Vorliegen eine gleichmäßige Verteilung der Radiallasten auf alle Kontaktbereiche zwischen den Profilen der Koppelelemente und den Profilen der Aussparungen gewährleistet ist. Dabei kann die Auslegung zusätzlich unter Berücksichtigung der Fertigungsgenauigkeit der Aussparungen und Koppelelemente erfolgen.

Dadurch wird im Falle von Verschleiß oder unterschiedlich hohen Anlagekräften im Bereich der Kontaktflächen zwischen den Aussparungen und den Koppelelementen oder sogar bei Rissbildungen im Bereich der Koppelelemente eine Verteilung der Radiallast auf benachbarte Koppelelemente und Aussparungen erzielt. Mit anderen Worten werden dadurch Lasten gleichmäßig in Umfang verteilt und eine Beschädigung einzelner Rotorblätter verhindert.

Der innere Ringkörper und/oder der äußere Ringkörper des Bling-Bauteils kann bzw. können Trennschnitte aufweisen und in Segmente unterteilt sein. Bei dieser alternativen Ausführungsform tragen der innere Ringkörper und der äußere Ringkörper in geringerem Umfang Lasten.

Dies ist von Vorteil, da die Bauteiltemperatur des Bling-Bauteil im Betrieb eines Gasturbinentriebwerks wesentlich höher ist als die Bauteiltemperatur der Rotorscheibe. Dabei ist der Temperaturunterschied während der transienten Beschleunigung des Gasturbinentriebwerks aus dem kalten Betriebszustand am höchsten. Dies bewirkt einen Anstieg des Durchmessers des Bling-Bauteils, was zu zusätzlichen radialen Belastungen im Bereich der Kontaktflanken der Koppelelemente und der Aussparungen der Rotorscheibe führt. Durch das Einbringen der Trennschnitte in den inneren Ringkörper und /oder in den äußeren Ringkörper nach dem Gießprozess können die ausdehnungsbedingt steigenden kompressiven Umfangslasten im Bereich des inneren Ringkörpers und im Bereich des äußeren Ringkörpers begrenzt werden.

In Abhängigkeit des jeweils vorliegenden Anwendungsfalles können zwischen den Trennschnitten des inneren Ringkörpers jeweils wenigstens zwei Verbindungsbereiche zwischen dem inneren Ringkörper und wenigstens zwei Rotorblättern und/oder zwischen den Trennschnitten des äußeren Ringkörpers jeweils wenigstens zwei Verbindungsbereiche zwischen dem äußeren Ringkörper und wenigstens zwei Rotorblättern angeordnet sein.

Dabei besteht die Möglichkeit, dass jeweils ein Trennschnitt des inneren Ringkörpers in Umfangsrichtung zwischen zwei Trennschnitten des äußeren Ringkörpers und jeweils ein Trennschnitt des äußeren Ringkörpers in Umfangsrichtung jeweils zwischen zwei Trennschnitten des inneren Ringkörpers liegt.

Die Schnitte oder Teilungen können auch nach jedem zweiten, dritten usw. Rotorblatt und abwechselnd im Bereich des inneren Ringkörpers und im Bereich des äußeren Ringkörpers vorgesehen sein.

Trotz der abwechselnd im Bereich des inneren Ringkörpers und im Bereich des äußeren Ringkörpers vorgesehenen Trennschnitte ist das Bling-Bauteil nach wie vor einstückig ausgeführt, was eine gewünscht hohe Bauteilsteifigkeit in Bezug auf Eigenmoden und Schwingungsfrequenzen bewirkt. Dadurch können etwaige Dämpfungselemente entfallen und Schwingungsresonanzen der Rotorvorrichtung vermieden werden.

Um die Elastizität des Bling-Bauteils mit geringem konstruktiven Aufwand einstellen zu können, kann der innere Ringkörper im Bereich seiner radialen Innenseite mit wenigstens einer sich in Umfangsrichtung erstreckenden Ringrippe ausgeführt sein. Zusätzlich werden im Bereich der Ringrippe die in Umfangsrichtung im inneren Ringkörper wirkenden Lasten teilweise abgestützt, was zur Entlastung der Übergangsbereiche zwischen dem inneren Ringkörper und den Rotorblättern beiträgt. Dabei kann die radiale Höhe der Ringrippe so ausgelegt sein, dass ein innerer Randbereich der Ringrippe von einer Außenseite der Rotorscheibe in radialer Richtung beabstandet ist.

Ein weiterer Aspekt der vorliegenden Offenbarung betrifft ein Verfahren zur Herstellung der vorstehend näher beschriebenen Rotorvorrichtung, bei dem das Bling-Bauteil während eines Gießvorgangs einstückig hergestellt wird.

Bei einer einfach und kostengünstig durchführbaren Variante des Verfahrens gemäß der vorliegenden Offenbarung werden die Koppelelemente nach den Gießprozess mittels Funkenerodieren (EDM,Electrical Discharge Machining) hergestellt.

Die Bauteiltemperatur des Bling-Bauteils kann vor dem Einschieben der Koppelelemente in die Aussparungen der Rotorscheibe auf ein definiertes Temperaturniveau abgesenkt werden, zu dem die Koppelelemente leicht in die Aussparungen einsetzbar sind. Beim anschließenden Wiedererwärmen des Bling-Bauteils entsteht dann die Presspassung zwischen den Anlageflächen der Koppelelemente und den Anlageflächen der Aussparungen.

Wenn die mittleren Anlagepunkte in radialer Richtung entsprechend zueinander versetzt angeordnet sind, können die Rotorscheibe und das Bling-Bauteil auch ohne entsprechende Temperierung miteinander verbunden werden.

Vorliegend wird unter anderem ein Verbindungs-Konzept zwischen dem Bling-Bauteil und der Rotorscheibe vorgeschlagen, bei dem im Wesentlichen lediglich Drehmoment und Radialkräfte zwischen dem Bling-Bauteil und der Rotorscheibe übertragen werden und der Umfangslastpfad entkoppelt ist. Dies wird erreicht, indem die Druckflanken jeder Aussparung der Rotorscheibe radial zwischen den beiden Seiten verschoben sind, weshalb sich das Bling-Bauteil frei ausdehnen kann. Dies ist der Fall, da bei einer solchen Ausführung der Rotorvorrichtung jeweils nur ein Kontaktbereich der Koppelelemente des Bling-Bauteils mit einem Kontaktbereich bzw. einer Druckflanke einer Aussparung der Rotorscheibe in Eingriff steht. Erst wenn entsprechend hohe Temperaturen und definierte Betriebsbedingungen erreicht werden, stehen alle Kontaktbereiche der Koppelelemente mit den jeweils zugeordneten Druckflanken der Aussparungen der Rotorscheibe in Eingriff.

Das hat den Vorteil, dass thermische Fehlbelastungen zwischen der inneren Rotorscheibe und dem äußeren Bling-Bauteil vermieden oder reduziert werden und Umfangsspannungen im Bereich des inneren Ringkörpers verringert werden. Dadurch besteht die Möglichkeit, das Bling-Bauteil mit Werkstoffen herzustellen, die eine geringere mechanische Festigkeit aufweisen.

Die Erfindung ist nicht auf die angegebenen Kombinationen der Merkmale der unabhängigen Ansprüche oder der hiervon abhängigen Ansprüche beschränkt. Es ergeben sich im Rahmen der Ansprüche darüber hinaus Möglichkeiten, einzelne Merkmale, soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch die Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ausführungsbeispiele der Erfindung werden ohne hierauf beschränkt zu sein, anhand der Zeichnung näher erläutert.

Dabei zeigt:
- Fig. 1: eine vereinfachte Seitenansicht eines einstückigen Bling-Bauteils einer Rotorvorrichtung, das einen äußeren Ringköper, einen inneren Ringkörper, radial dazwischen verlaufende Rotorblätter und an der radialen Innenseite des inneren Ringkörpers mehrere Koppelelemente umfasst;
- Fig. 2: eine vergrößerte Ansicht eines in Fig. 1 näher gekennzeichneten Bereiches II;
- Fig. 3: eine vergrößerte Ansicht eines in Fig. 1 näher gekennzeichneten Bereiches III, der einen Teil des inneren Ringkörpers und eines der Koppelelemente umfasst, wobei das Koppelelement in eine Aussparung einer Rotorscheibe eingreift;
- Fig. 4: eine Einzeldarstellung einer Aussparung einer weiteren Ausführungsform der Rotorvorrichtung, wobei die Aussparung ein Tannenbaumprofil aufweist;
- Fig. 5: eine vergrößerte Ansicht eines in Fig. 1 näher gekennzeichneten Bereiches V;
- Fig. 6: den Bereich V aus einer in Fig. 5 näher gekennzeichneten Ansicht VI;
- Fig. 7: eine stark vereinfachte Alleindarstellung eines Koppelelementes, das in einer Aussparung einer Rotorscheibe angeordnet ist, wobei mittlere Kontaktpunkte von radial nach innen ausgerichteten Kontaktflächen der Aussparung in radialer Richtung zueinander versetzt sind;
- Fig. 8: eine Seitenansicht eines in Fig. 1 näher gekennzeichneten Bereiches VIII einer weiteren Ausführungsform der Rotorvorrichtung, bei der der äußere Ringkörper und der innere Ringkörper jeweils durch Trennschnitte in Segmente unterteilt sind;
- Fig. 9: eine dreidimensionale Seitenansicht eines Teilbereiches einer weiteren Ausführungsform der Rotorvorrichtung;
- Fig, 10: eine dreidimensionale Unteransicht eines in Fig. 9 näher gekennzeichneten Bereiches X ohne den Bereich der Rotorscheibe;
- Fig. 11: eine weitere Fig. 10 entsprechende Darstellung des Bereiches X in einer Ansicht von schräg unten; und
- Fig. 12: eine dreidimensionale Unteransicht eines Segmentes des Bling-Bauteils der Rotorvorrichtung gemäß Fig. 9.

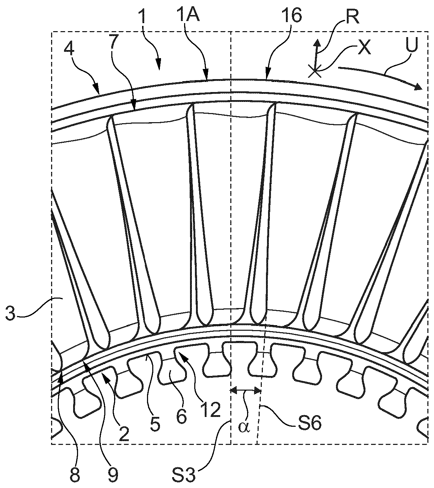

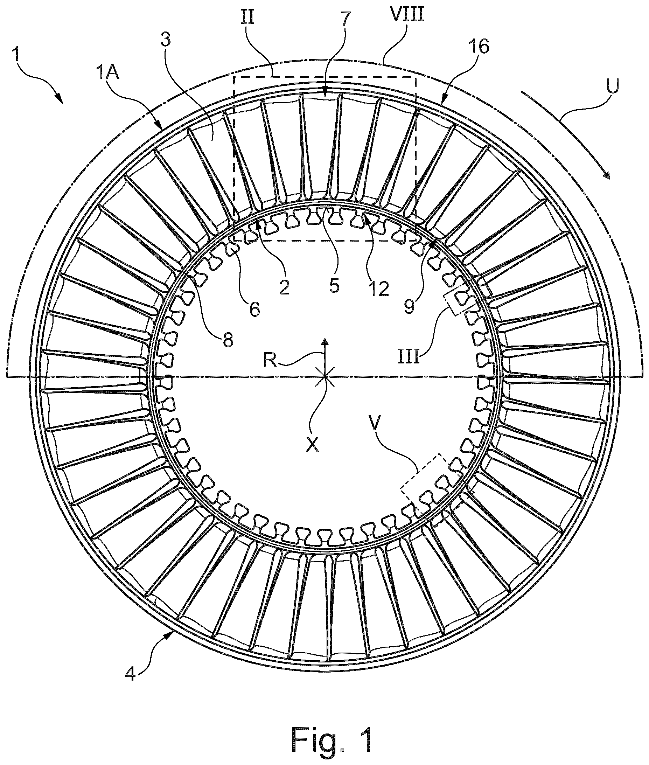

Fig. 1 zeigt eine Seitenansicht einer Rotorvorrichtung 1 eines Gasturbinen-Flugtriebwerkes. Die Rotorvorrichtung 1 umfasst einen inneren Ringkörper 2, der einstückig mit Rotorblättern 3 ausgeführt ist. Die Rotorblätter 3 erstrecken sich vom inneren Ringkörper 2 radial nach außen, stehen mit ihren dem inneren Ringkörper 3 abgewandten Enden mit einem äußeren Ringkörper 4 in Verbindung und sind einstückig mit dem äußeren Ringkörper 4 ausgebildet. Der innere Ringkörper 2 ist im Bereich einer ringförmigen Innenseite 5, die den Rotorblättern 3 abgewandt ist, einstückig mit mehreren in Umfangsrichtung U des inneren Ringkörpers 2 zueinander beabstandeten Koppelelementen 6 ausgeführt.

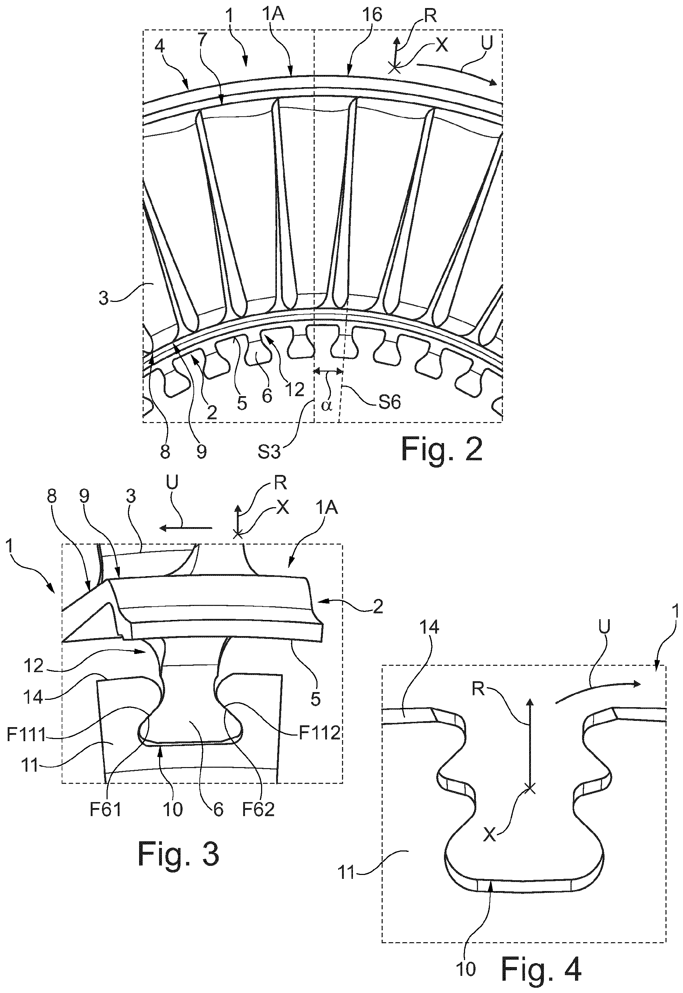

Fig. 2 zeigt eine vergrößerte Seitenansicht eines in Fig. 1 näher gekennzeichneten Bereiches II der Rotorvorrichtung 1. Aus der Darstellung gemäß Fig. 2 geht hervor, dass die Koppelelemente 6 und die Rotorblätter 3 in Umfangsrichtung U zueinander versetzt angeordnet sind und in radialer Richtung R verlaufende Symmetrielinien S6 der Koppelelemente 6 in Umfangsrichtung U des inneren Ringkörpers 2 jeweils einen spitzen Winkel α mit radial verlaufenden Symmetrielinien S3 der Rotorblätter 3 einschließen. Der Winkel α zwischen den Symmetrielinien S6 der Koppelelemente und der Symmetrielinien S3 der Rotorblätter 3 wird in Abhängigkeit des jeweils vorliegenden Anwendungsfalles derart ausgelegt, dass eine gewünschte Last-und Spannungsverteilung innerhalb von Verbindungsbereichen 7 zwischen den Rotorblättern 3 und dem äußeren Ringkörper 4, im Bereich von Plattformen 8 des inneren Ringkörpers 2 sowie in von den Plattformen 8 umgebenen Verbindungsbereichen 9 zwischen den Rotorblättern 3 und dem inneren Ringkörper 2 vorliegt.

Die Koppelelemente 6 sind in der in Fig. 3 näher dargestellten Art und Weise formschlüssig mit Aussparungen 10 einer Rotorscheibe 11 in Eingriff bringbar, wobei die Rotorscheibe 11 radial innerhalb des inneren Ringkörpers 2 anordenbar ist bzw. montiert wird. Sowohl die Koppelelemente 6 als auch die Aussparungen 10 weisen bei dem in Fig. 3 dargestellten Ausführungsbeispiel der Rotorvorrichtung 1 ein schwalbenschwanzförmiges Profil auf. In Abhängigkeit des jeweils vorliegenden Anwendungsfalles besteht auch die Möglichkeit, dass die Koppelelemente 6 und die Aussparungen 10 ein in Fig. 4 dargestelltes tannenbaumförmiges Profil aufweisen.

Die Rotorvorrichtung 1 umfasst ein einstückiges Rotorbauteil, das aus dem äußeren Ringkörper 4, den Rotorblättern 3, dem inneren Ringkörper 2 und den Koppelelementen 6 besteht, eine sogenannte einstückige BLING-Bauweise ("Bladed Ring") aufweist und nachfolgend als Bling-Bauteil 1A bezeichnet wird.

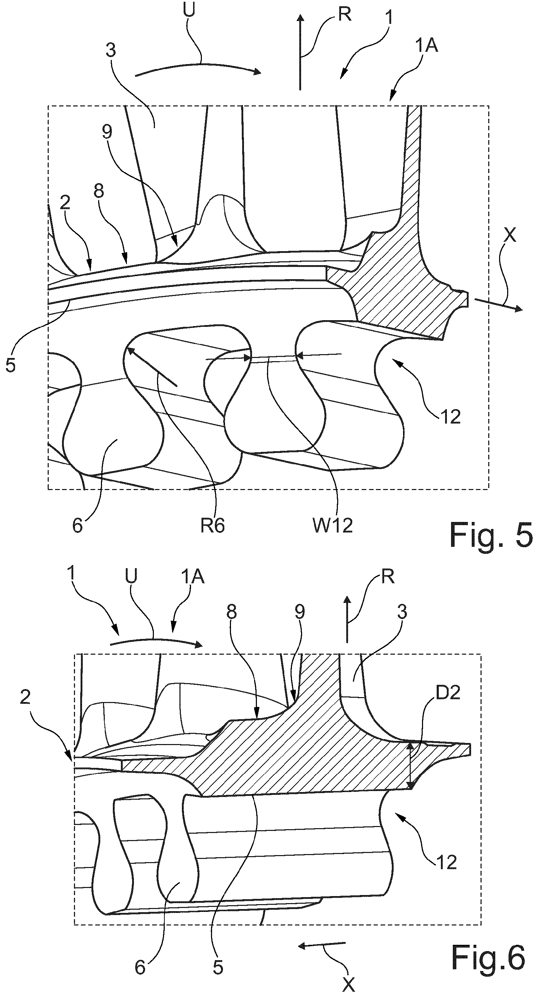

Fig. 5 zeigt einen in Fig. 1 näher gekennzeichneten Bereich V des Bling-Bauteils 1A in einer dreidimensionalen Ansicht von schräg unten. Übergangsradien R6 der Koppelelemente 6 in Verbindungsbereichen 12 der Koppelelemente 6 mit der Innenseite 5 des inneren Ringkörpers 2 und minimale Wandstärken W12 der Verbindungsbereiche 12 in Umfangsrichtung U des inneren Ringkörpers 2 werden in Abhängigkeit von im Betrieb anliegenden maximalen Radiallasten und in den Verbindungsbereichen 12 wirkenden Spannungskonzentrationen so ausgelegt, dass alle Anlageflächen F61, F62 der Profile der Koppelelemente 6 mit allen Anlageflächen F111, F112 der Profile der Aussparungen 10 im Betrieb formschlüssig in Kontakt stehen.

Des weiteren werden Dicken D2 des inneren Ringkörpers 2 in den Verbindungsbereichen 9, die in Fig. 6 näher gekennzeichnet sind, in Abhängigkeit einer Bauteilsteifigkeit und einer Biegefähigkeit des inneren Ringkörpers 2 ausgelegt, bei deren Vorliegen eine gleichmäßige Verteilung der Radiallasten auf alle Kontaktbereiche zwischen den Profilen der Koppelelemente 6 und den Profilen der Aussparungen 10 gewährleistet ist.

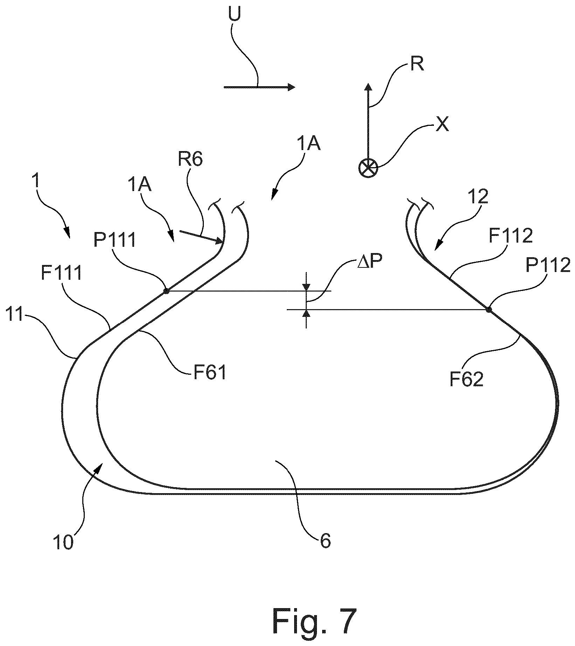

Wie in Fig. 7 dargestellt können mittlere Anlagepunkte P111, P112 bzw. Kontaktpunkte der radial nach innen gerichteten und in Umfangsrichtung U der Rotorscheibe 11 nebeneinander angeordneten Anlageflächen F111, F112 der Aussparungen der Rotorscheibe 11 in radialer Richtung R zueinander versetzt angeordnet sein. Dadurch wird erreicht, dass die radial nach außen gerichteten Anlageflächen F62 der Profile der Koppelelemente 6 des Bling-Bauteils 1A in montiertem Zustand und im Betrieb bereits bei niedrigen Drehzahlen und geringen thermischen Belastungen jeweils an den Anlageflächen F112 der Aussparungen 10 der Rotorscheibe 11 anliegen, deren mittlere Anlagepunkte P112 radial weiter innen liegen. Im Unterscheid dazu sind die jeweils weiteren Anlageflächen F61 der Profile der Koppelelemente 6 zu den Anlageflächen F111 der Profile der Aussparungen 10 beabstandet, deren mittlere Anlagepunkte P111 radial weiter außen liegen.

Der radiale Versatz ΔP zwischen den mittleren Anlagepunkten P111 und P112 der radial nach innen gerichteten Anlageflächen F111 und F112 der Aussparungen 10 bewirkt, dass ein Koppelelement 6, das in eine derart ausgebildete Aussparung 10 eingreift, nach der Montage zunächst sich lediglich auf einer Seite mit der Kontaktfläche F62 der Aussparung 10 in Anlage befindet. Während des Starts eines mit der Rotorvorrichtung 1 ausgeführten Gasturbinentriebwerks und im weiteren Betrieb des Gasturbinentriebwerks wird das Bling-Bauteil 1A erwärmt und dehnt sich mit steigender Bauteiltemperatur sowie aufgrund der angreifenden Zentrifugalkräfte aus, bis das jeweilige Koppelelement 6 auch im Bereich der gegenüberliegenden Kontaktfläche F111 in Anlage kommt. Der radiale Versatz ΔP ermöglicht eine radiale Ausdehnung des Bling-Bauteils 1A und damit der Rotorscheibe 11 die Zentrifugalkräfte abzustützen, die am Bling-Bauteil 1A angreifen. Dadurch wird die Belastung eines Scheibenrands 14 der Rotorscheibe 11 reduziert. Zudem ermöglicht die teilweise Verschiebung der Betriebslasten von der Rotorscheibe 11 in das Bling-Bauteil 1A, die Rotorscheibe 11 mit einer geringeren Bauteilfestigkeit oder mit einem geringeren Bauteilgewicht auszuführen. In Abhängigkeit der Größe des radialen Versatzes ΔP sind die Lasten und Spannungen, die in Umfangsrichtung am inneren Ringkörper 2 angreifen, einstellbar und kontrollierbar.

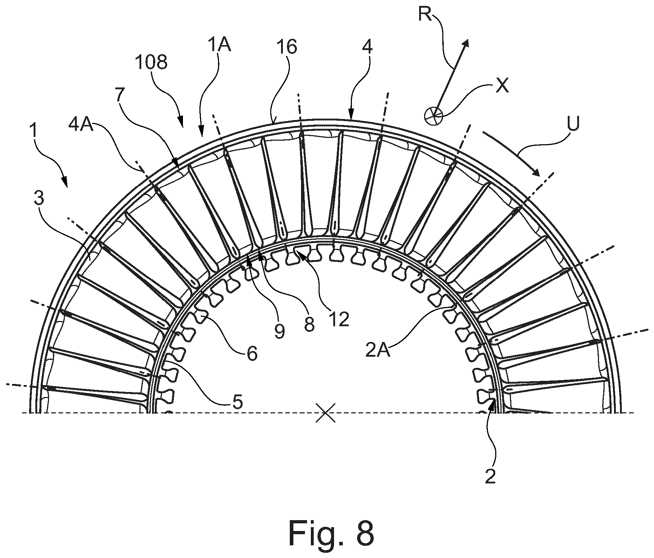

Fig. 8 zeigt einen in Fig. 1 näher gekennzeichneten Bereich VIII einer weiteren Ausführungsform der Rotorvorrichtung 108, bei der sowohl der innere Ringkörper 2 als auch der äußere Ringkörper 4 Trennschnitte 2A bzw. 4A auf weisen. Zwischen den Trennschnitten 2A des inneren Ringkörpers 2 sind jeweils wenigstens zwei Verbindungsbereiche 9 zwischen dem inneren Ringkörper 2 und jeweils zwei Rotorblättern 3 angeordnet. Des Weiteren sind jeweils zwischen den Trennschnitten 4A des äußeren Ringkörpers 4 zwei Verbindungsbereiche 7 zwischen dem äußeren Ringkörper 4 und zwei Rotorblättern 3 vorgesehen. Dabei liegt jeweils ein Trennschnitt 2A des inneren Ringkörpers 2 in Umfangsrichtung U zwischen zwei Trennschnitten 4A des äußeren Ringkörpers 4. Zusätzlich ist jeweils ein Trennschnitt 4A des äußeren Ringkörpers 4 in Umfangsrichtung U zwischen zwei Trennschnitten 2A des inneren Ringkörpers 2 angeordnet, wodurch das Bling-Bauteil 1A nach wie vor eine einstückige Ausführung aufweist.

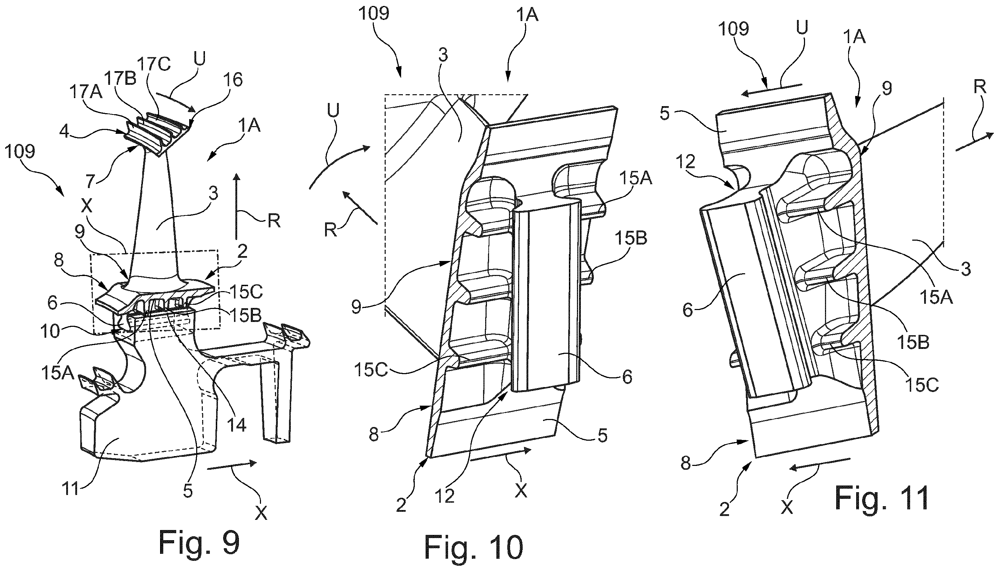

Fig. 9 zeigt eine Schnittansicht eines Teilbereiches einer weiteren Rotorvorrichtung 109. Das in Fig. 9 dargestellte Teilsegment des Bling-Bauteils 1A umfasst einen Teilbereich des inneren Ringkörpers, ein Rotorblatt 3 und einen Teilbereich des äußeren Ringkörpers 4. Der innere Ringkörper 2 weist an seiner Innenseite 5 drei sich in Umfangsrichtung U erstreckende Ringrippen 15A bis 15C auf, die in axialer Richtung X zueinander beabstandet sind. In radialer Richtung R kragen die Ringrippen 15A bis 15C von der Innenseite 5 des inneren Ringkörpers 2 in Richtung des Scheibenrands 14 der Rotorscheibe 11 vor. Dabei ist eine radiale Höhe der Ringrippen 15A bis 15C derart, dass freie Enden der Ringrippen 15A bis 15C vom Scheibenrand 14 der Rotorscheibe beabstandet sind und somit nicht mit dem Scheibenrands 14 in Kontakt stehen.

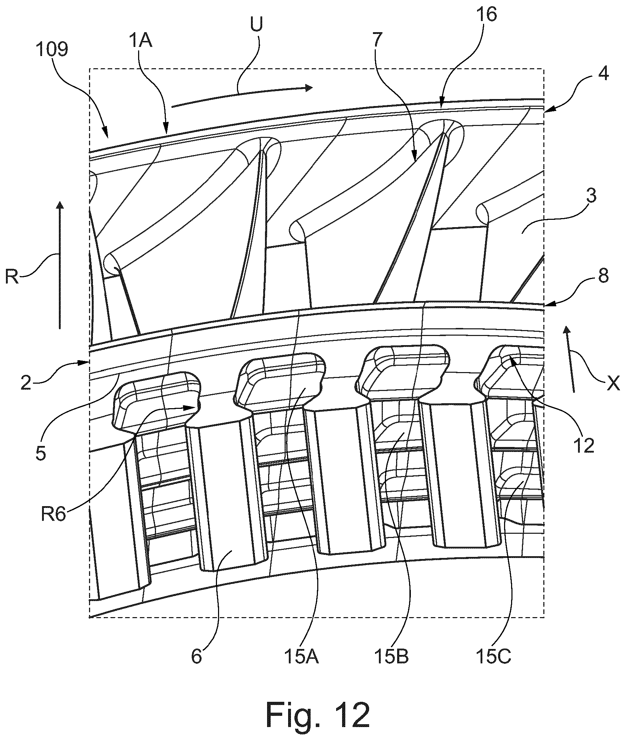

Fig. 10 zeigt einen in Fig. 9 näher gekennzeichneten Bereich X in einer dreidimensionalen Ansicht von unten, während Fig. 11 den Bereich X in einer weiteren dreidimensionalen Ansicht von schräg unten darstellt. Zudem ist in Fig. 12 ein Segment des Bling-Bauteils 1A der Rotorvorrichtung 109 in einer Ansicht von schräg unten gezeigt. Der äußere Ringkörper 4 ist an seiner radialen Außenseite 16 ebenfalls mit sich in Umfangsrichtung U erstreckenden und in axialer Richtung X zueinander beabstandeten Ringrippen 17A bis 17C ausgebildet, wodurch eine gute Abdichtung und eine effiziente Heissgasmassenströmung erzielt wird. Zudem besteht die Möglichkeit, dass sowohl über die Ringrippen 15A bis 15C als auch über die Ringrippen 17A bis 17C im Betrieb der Rotorvorrichtung 109 Wärmeenergie an die Umgebung der Rotorvorrichtung 109 abgegeben wird.

Die Bling-Bauteile 1A der Rotorvorrichtungen 1, 108, 109 werden zunächst mittels eines Gießprozesses einstückig hergestellt. Im Anschluss werden die Koppelelemente 6 mittels eines kostengünstigen Herstellungsverfahrens, wie Funkenerodieren (EDM, Electrical Discharge Machining), an der Innenseite 5 des inneren Ringkörpers 2 hergestellt. Nach der fertigungstechnischen Bearbeitung der Bling-Bauteile 1A der Rotorvorrichtung 1, 108, 109, wird die Bauteiltemperatur der Bling-Bauteile 1A vor der Montage mit einer Rotorscheibe 11 entsprechend auf ein eine Fügetemperatur abgekühlt. Dies bewirkt, dass sich radiale Abmessungen der Bling-Bauteile 1A reduzieren und die Koppelelemente 6 mit geringen Fügekräften mit den Aussparungen 10 der Rotorscheibe 11 in Eingriff bringbar sind.

Dabei sind die Profile der Aussparungen 10 der Rotorscheibe 11 und die Profile der Koppelelemente 6 so aufeinander abgestimmt, dass sich in montiertem Zustand der Rotorscheibe 11 zwischen den Kontaktflächen F61, F62 der Koppelelemente 6 und den Kontaktflächen F111, F112 eine Presspassung einstellt, wenn die Bauteiltemperatur wieder auf ein Temperaturniveau oberhalb der vorher eingestellten Fügetemperatur ansteigt.

Durch den radialen Versatz zwischen den mittleren Anlagepunkten P111 und P112 liegt zwischen den Kontaktflächen F111 und F112 der Aussparungen 10 und den Kontaktflächen F61 und F62 der Koppelelemente 6 jeweils in radialer Richtung R ein Spalt vor, der die vorbeschriebene Reduzierung der Bauteiltemperatur des Bling-Bauteils 1A vor dem Fügen des Bling-Bauteils 1A mit der Rotorscheibe 11 nicht erfordert.

### Bezugszeichenliste

- 1, 108, 109: Rotorvorrichtung
- 1A: Bling-Bauteil
- 2: innerer Ringkörper
- 2A: Trennschnitt des inneren Ringkörpers
- 3: Rotorblatt
- 4: äußerer Ringkörper
- 4A: Trennschnitt des äußeren Ringkörpers
- 5: ringförmige Innenseite des inneren Ringkörpers
- 6: Koppelelement
- 7: Verbindungsbereich zwischen dem Rotorblatt und dem äußeren Ringkörper
- 8: Plattform
- 9: Verbindungsbereich zwischen dem inneren Ringkörper und dem Rotorblatt
- 10: Aussparung
- 11: Rotorscheibe
- 12: Verbindungsbereich des Koppelelementes mit der Innenseite des inneren Ringkörpers
- 14: Scheibenrand
- 15A bis 15C: Ringrippe
- 16: radiale Außenseite des äußeren Ringkörpers
- 17A bis 17C: Ringrippe
- D2: Dicke der Plattform
- F61, F62: Kontaktfläche des Koppelelements
- F111, F112: Kontaktfläche der Aussparung
- P111, P112: mittlerer Anlagepunkt
- ΔP: radialer Versatz zwischen den mittleren Anlagepunkten
- R: radiale Richtung
- R6: Übergangsradius des Verbindungsbereiches zwischen dem Koppelelement und dem inneren Ringkörper
- S3: Symmetrielinie des Rotorblattes
- S6: Symmetrielinie des Koppelelementes
- U: Umfangsrichtung
- W12: minimale Wandstärke des Verbindungsbereiches zwischen dem Koppelelement und dem inneren Ringkörper
- X: axiale Richtung
- α: Winkel

## Patentansprüche

1. Rotorvorrichtung (1; 108; 109) eines Gasturbinen-Flugtriebwerkes mit einem inneren Ringkörper (2), der einstückig mit Rotorblättern (3) ausgeführt ist, die sich vom inneren Ringkörper (2) radial nach außen erstrecken und mit ihren dem inneren Ringkörper (2) abgewandten Enden mit einem äußeren Ringkörper (4) in Verbindung stehen und einstückig mit dem äußeren Ringköper (4) ausgebildet sind, **dadurch gekennzeichnet, dass** der innere Ringkörper (2) im Bereich einer ringförmigen Innenseite (5), die den Rotorblättern (3) abgewandt ist, einstückig mit mehreren in Umfangsrichtung (U) des inneren Ringkörpers (2) zueinander beabstandeten Koppelelementen (6) ausgeführt ist, die formschlüssig mit Aussparungen (10) einer Rotorscheibe (11) in Eingriff bringbar sind, die radial innerhalb des inneren Ringkörpers (2) anordenbar ist.

2. Rotorvorrichtung nach Anspruch 1, **dadurch gekennzeichnet, dass** die Koppelelemente (6) in Umfangsrichtung (U) des inneren Ringkörpers (2) jeweils ein schwalbenschwanzförmiges oder ein tannenbaumförmiges Profil aufweisen und die Aussparungen (10) der Rotorscheibe (11) jeweils mit Profilen ausgeführt sind, die zur Herstellung der formschlüssigen Verbindung jeweils mit den Profilen der Koppelelemente (6) korrespondieren.

3. Rotorvorrichtung nach Anspruch 1 oder 2, **dadurch gekennzeichnet, dass** die Anzahl der Rotorblätter (3) gleich der Anzahl der Koppelelemente (6) entspricht oder von der Anzahl der Koppelelemente (6) abweicht.

4. Rotorvorrichtung nach einem der vorstehenden Ansprüche, **dadurch gekennzeichnet, dass** eine in radialer Richtung (R) verlaufende Symmetrielinie (S6) von wenigstens einem der Koppelelemente (6) mit einer radial verlaufenden Symmetrielinie (S3) eines der Rotorblätter (3) fluchtet.

5. Rotorvorrichtung nach einem der vorstehenden Ansprüche, **dadurch gekennzeichnet, dass** die Koppelelemente (6) und die Rotorblätter (3) in Umfangsrichtung (U) zueinander versetzt angeordnet sind und in radialer Richtung (R) verlaufende Symmetrielinien (S6) der Koppelelemente (6) in Umfangsrichtung (U) des inneren Ringkörpers (2) jeweils einen spitzen Winkel (α) mit radial verlaufenden Symmetrielinien (S3) der Rotorblätter (3) einschließen.

6. Rotorvorrichtung nach einem der Ansprüche 2 bis 5, **dadurch gekennzeichnet, dass** die Profile der Koppelelemente (6) und die Profile der Aussparungen (10) der Rotorscheibe (3) dazu eingerichtet sind, dass in montiertem Zustand des inneren Ringkörpers (2) zwischen radial nach außen weisenden Anlageflächen (F61, F62) der Profile der Koppelelemente (6) und radial nach innen weisenden Anlageflächen (F111, F112) der Profile der Aussparungen (10) jeweils eine Presspassung vorliegt.

7. Rotorvorrichtung nach einem der Ansprüche 2 bis 5, **dadurch gekennzeichnet, dass** mittlere Anlagepunkte (P111, P112) von radial nach innen gerichteten und in Umfangsrichtung (U) der Rotorscheibe (11) nebeneinander angeordneten Anlageflächen (F111, F112) der Profile der Aussparungen (10) der Rotorscheibe (11)jeweils in radialer Richtung (R) zueinander versetzt sind, wobei radial nach außen gerichtete Anlageflächen (F61, F62) der Profile der Koppelelemente (6) in montiertem Zustand jeweils an den Anlageflächen (F112) anliegen, deren mittlere Anlagepunkte (P112) radial weiter innen liegen, während die jeweils weiteren Anlageflächen (F61) der Profile der Koppelelemente (6) von den Anlageflächen (F111) der Profile der Aussparungen (10) beabstandet sind, deren mittlere Anlagepunkte (P111) radial weiter außen liegen.

8. Rotorvorrichtung nach einem der vorstehenden Ansprüche, **dadurch gekennzeichnet, dass** Übergangsradien (R6) der Koppelelemente (6) in Verbindungsbereichen (12) der Koppelelemente (6) mit der Innenseite (5) des inneren Ringkörpers (2) und minimale Wandstärken (W12) der Verbindungsbereiche in Umfangsrichtung des inneren Ringkörpers in Abhängigkeit von im Betrieb anliegenden maximalen Radiallasten und im Verbindungsbereich wirkenden Spannungskonzentrationen so ausgelegt werden, dass alle Anlageflächen der Profile der Koppelelemente mit allen Anlageflächen der Profile der Aussparungen in Kontakt stehen.

9. Rotorvorrichtung nach einem der vorstehenden Ansprüche, **dadurch gekennzeichnet, dass** Dicken (D2) des inneren Ringkörpers (2) in Verbindungsbereichen (9) mit den Rotorblättern (3) in Abhängigkeit einer Bauteilsteifigkeit und einer Biegefähigkeit des inneren Ringkörpers (2) ausgelegt werden, bei deren Vorliegen eine gleichmäßige Verteilung der Radiallasten auf alle Kontaktbereiche zwischen den Profilen der Koppelelemente (6) und den Profilen der Aussparungen (10) gewährleistet ist.

10. Rotorvorrichtung nach einem der vorstehenden Ansprüche, **dadurch gekennzeichnet, dass** der innere Ringkörper (2) und/oder der äußere Ringkörper (4) Trennschnitte (2A, 4A) aufweist bzw. aufweisen und in Segmente unterteilt ist bzw. sind, wobei insbesondere zwischen den Trennschnitten (2A) des inneren Ringkörpers (2) jeweils wenigstens zwei Verbindungsbereiche (9) zwischen dem inneren Ringkörper (2) und wenigstens zwei Rotorblättern (3) angeordnet sind.

11. Rotorvorrichtung nach Anspruch 10, **dadurch gekennzeichnet, dass** zwischen den Trennschnitten (4A) des äußeren Ringkörpers (4) jeweils wenigstens zwei Verbindungsbereiche (7) zwischen dem äußeren Ringkörper (4) und wenigstens zwei Rotorblättern (3) angeordnet sind.

12. Rotorvorrichtung nach einem der vorstehenden Ansprüche, **dadurch gekennzeichnet, dass** jeweils ein Trennschnitt (2A) des inneren Ringkörpers (2) in Umfangsrichtung (U) zwischen zwei Trennschnitten (4A) des äußeren Ringkörpers (4) und jeweils ein Trennschnitt (4A) des äußeren Ringkörpers (4) in Umfangsrichtung (U) jeweils zwischen zwei Trennschnitten (2A) des inneren Ringkörpers (2) liegt.

13. Rotorvorrichtung nach einem der vorstehenden Ansprüche, **dadurch gekennzeichnet, dass** der innere Ringkörper (2) im Bereich seiner Innenseite (5) mit wenigstens einer sich in Umfangsrichtung (U) erstreckenden Ringrippe (15A bis 15C) ausgeführt ist, deren radiale Höhe so ausgelegt ist, dass ein innerer Randbereich der Ringrippe (15A, 15C) von einem Scheibenrand (14) der Rotorscheibe (11) in radialer Richtung (R) beabstandet ist.

14. Verfahren zur Herstellung einer Rotorvorrichtung (1; 108; 109) nach einem der Ansprüche 1 bis 13, **dadurch gekennzeichnet, dass** der äußere Ringkörper (4), die Rotorblätter (3), der innere Ringkörper (2) und die Koppelelemente (6) während eines Gießprozesses einstückig gefertigt werden, wobei insbesondere die Profile der Koppelelemente (6) mittels Funkenerodieren (EDM ,Electrical Discharge Machining) hergestellt werden.

15. Verfahren nach Anspruch 14, **dadurch gekennzeichnet, dass** die Bauteiltemperatur des äußeren Ringkörpers (4), der Rotorblätter (3), des inneren Ringkörpers (2) und der Koppelelemente (6) vor dem Einschieben der Koppelelemente (6) in die Aussparungen (10) der Rotorscheibe (10) auf ein definiertes Temperaturniveau abgesenkt wird, zu dem die Koppelelemente (6) leicht in die Aussparungen (10) einsetzbar sind, wobei beim anschließenden Wiedererwärmen des äußeren Ringkörpers (4), der Rotorblätter (3), des inneren Ringkörpers (2) und der Koppelelemente (6) die Presspassung zwischen den Anlageflächen (F61, F62) der Koppelelemente (6) und den Anlageflächen (F111, F112) der Aussparungen (10) entsteht.
